# EUROPÄISCHE PATENTSCHRIFT

(11) **EP 3 021 135 B1**
(45) Veröffentlichungstag und Bekanntmachung des Hinweises auf die Patenterteilung: **15.08.2018**
(21) Anmeldenummer: 14003841.5
(22) Anmeldetag: 14.11.2014
(51) Int. Cl.: G01S 13/90

(54) **Reduktion von Empfangsdaten eines Radars, insbesondere eines synthetischen Aperturradars**
Reduction of reception data of a radar, particularly a synthetic aperture radar
Réduction de données de réception d'un radar, en particulier d'un radar à ouverture synthétique

(43) Veröffentlichungstag der Anmeldung: 18.05.2016
(73) Patentinhaber: Airbus Defence and Space GmbH, 82024 Taufkirchen (DE)
(72) Erfinder: Becker, Thomas, 78465 Konstanz (DE)
(74) Vertreter: Frenkel, Matthias Alexander

(56) Entgegenhaltungen:
- CN-A- 104 237 857
- SACK M ET AL: "Application of efficient linear FM matched filtering alggorithms to synthetic aperture radar processing", IEE PROCEEDINGS F. COMMUNICATIONS, RADAR & SIGNALPROCESSING, INSTITUTION OF ELECTRICAL ENGINEERS. STEVENAGE, GB, Bd. 1, Nr. 132, 1. Februar 1985 (1985-02-01), Seiten 45-57, XP002075592, ISSN: 0956-375X
- ALBRECHT S ET AL: "Application of momentary Fourier transform to SAR processing", IEE PROCEEDINGS: RADAR, SONAR & NAVIGATION, INSTITUTION OF ELECTRICAL ENGINEERS, GB, Bd. 146, Nr. 6, 2. Dezember 1999 (1999-12-02), Seiten 285-297, XP006013693, ISSN: 1350-2395, DOI: 10.1049/IP-RSN:19990777
- Josef Mittermayer: "Simulatiopn eines Sotlight-Bildes aus Stripmap-Rohdaten" In: "Hochauflösende Verarbeitung von Radarsystemen mit synthetischer Apertur", 17. August 2000 (2000-08-17), Deutsches Zentrum für Luft- und Raumfahrt e. V., Köln, XP055183605, ISSN: 1434-8454 Bd. 2009-29, Seiten 157-174, * das ganze Dokument *
- KELLY S I ET AL: "Advanced image formation and processing of partial synthetic aperture radar data", IET SIGNAL PROCESSING, THE INSTITUTION OF ENGINEERING AND TECHNOLOGY, MICHAEL FARADAY HOUSE, SIX HILLS WAY, STEVENAGE, HERTS. SG1 2AY, UK, Bd. 6, Nr. 5, 6. Juli 2012 (2012-07-06), Seiten 511-520, XP006040184, ISSN: 1751-9675, DOI: 10.1049/IET-SPR.2011.0073
- DALE A AUSHERMAN ET AL: "Developments in Radar Imaging", IEEE TRANSACTIONS ON AEROSPACE AND ELECTRONIC SYSTEMS, IEEE SERVICE CENTER, PISCATAWAY, NJ, US, Bd. AES-2, Nr. 4, 1. Juli 1984 (1984-07-01), Seiten 363-400, XP011211740, ISSN: 0018-9251
- CHOT HUN LIM ET AL: "A new data acquisition and processing system for UAVSAR", IEICE ELECTRONICS EXPRESS, Bd. 8, Nr. 20, 1. Januar 2011 (2011-01-01) , Seiten 1716-1722, XP055183641, DOI: 10.1587/elex.8.1716

## Beschreibung

Die Erfindung betrifft ein Verfahren zur Reduktion von Empfangsdaten eines Radars, insbesondere eines Synthetischen Apertur Radars (SAR) und einen Empfänger für Daten eines Radars, insbesondere eines SAR, gemäß den unabhängigen Ansprüchen.

Auf fliegenden Radar-Plattformen ist die Reduktion von empfangenen Radardaten eine Notwendigkeit, die sich aus den Missionsanforderungen auf der einen und den beschränkten Downlink-Kapazitäten auf der anderen Seite ergibt. Auch für Radarsysteme in anderen Anwendungen kann die Datenreduktion von Vorteil sein, um z.B. den Archivierungsaufwand zu reduzieren.

Ein Beispiel für eine fliegende Radar-Plattform ist das SAR, das ein Objekt wie beispielsweise die Erdoberfläche mittels einer bewegten Antenne abtastet. Zur Abtastung sendet das SAR Sendepulse aus und empfängt die Radar-Echosignale, also die an abgetasteten Objekten (Targets) reflektierten Sendepulse. Für jeden von der Antenne des SAR ausgeleuchteten und abgetasteten Bereich wird von einem SAR-Prozessor durch entsprechende Datenverarbeitung der Echosignale (Targetechos) eine Abbildung des abgetasteten Bereichs berechnet. Ein SAR wird beispielsweise zur Vermessung und Abbildung der Erdoberfläche eingesetzt. Die von einem SAR ausgesendeten Sendepulse sind in der Regel Chirp-Pulse, insbesondere linear frequenzmodulierte Pulse. Als fliegende Plattform für ein SAR kann ein Satellit, aber auch ein Flugzeug oder ein anderes in einer ausreichenden Höhe über der Erdoberfläche oder einer Planeten-Oberfläche fliegendes Flugobjekt dienen.

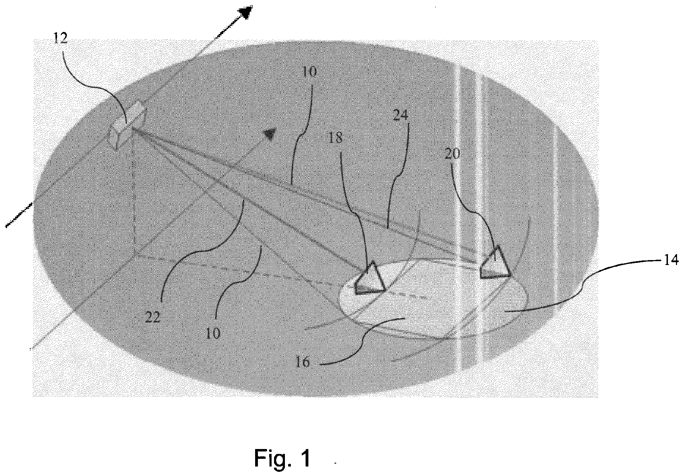

Fig. 1 illustriert die für eine fliegende SAR-Plattform für eine Datenreduktion der (Radar-)Echosignale bzw. Empfangsdaten relevanten Aspekte. Innerhalb des vom Sendepuls 10 eines SAR-Systems 12 beleuchteten Areals 14 (ovaler Bereich in Fig. 1) wird ein für die Bilderstellung gewünschtes Areal 16 (rechteckiger Bereich in Fig. 1, der innerhalb des ovalen Bereichs liegt) definiert. Daraus ergibt sich ein nächstgelegenes und ein entferntestes Target 18 bzw. 20, letzteres kann je nach Geometrie der Szene auch mehrfach vorhanden sein, was hier aber nicht von Bedeutung ist. Im Empfänger des SAR-Systems 12 erhält man vom nächstgelegenen und vom entferntesten Target jeweils ein Echo-Signal 22 bzw. 24, so wie es im Sender des SAR-Systems 12 erzeugt wurde. Eine mögliche Dopplerverschiebung kann hier ignoriert werden. Dazwischen finden sich alle Echos, die von dazwischen liegenden Targets herrühren. Targets, die außerhalb des gewünschten aber noch innerhalb des beleuchteten Areals liegen, bilden im Empfangssignal Chirps ab, die "vor" dem des nächstgelegenen oder "nach" dem des entferntesten Targets liegen.

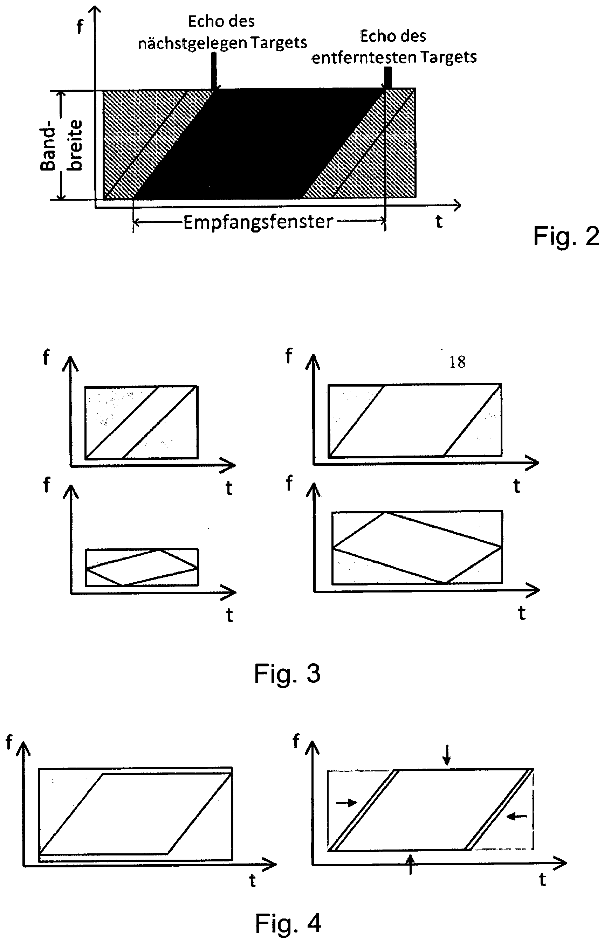

Fig. 2 verdeutlicht die Zuordnung der Targets zum Empfangssignal in einem Frequenz-Zeit-Diagramm des Frequenzspektrums der empfangenen Radar-Echosignale. Die Bandbreite wird durch das Spektrum der als Radarsignale eingesetzten Chirpsignale bestimmt. Das Empfangsfenster für die Radar-Echosignale ist abhängig vom gewünschten Areal 16. Mit anderen Worten werden innerhalb des Empfangsfensters Radar-Echosignale aus dem gewünschten Areal 16 empfangen. Für die Auswertung der Radar(echo)signale wird nur der in Fig. 2 dunkel gefärbte Signalanteil benötigt. Die beiden hellen Streifen, die den dunkel gefärbten Signalanteil seitlich begrenzen, enthalten Targetechos von Targets außerhalb des gewünschten Areals 16; Signalenergie aus diesen Bereichen geht nicht in die SAR Produkte ein. Die hellen, schraffierten (dreieckigen) Bereiche in Fig. 2 enthalten lediglich Empfängerrauschen und keine Signalenergie aus Targetechos.

Bisher sind in Weltraummissionen digitale Verfahren zur Datenreduktion nur in sehr geringem Umfang eingesetzt worden. Der Grund hierfür ist, dass die zur digitalen Datenreduktion erforderlichen strahlungsresistenten elektronischen Bauelemente für die geforderten Datenraten bisher nicht zur Verfügung standen.

Ein quasi natürliches Verfahren zur Datenreduktion ist die Anpassung der Abtastrate des Radar-Echos und der zugehörigen Anti-Aliasing Filter an die genutzte Signalbandbreite. Angewandt wird dieses Verfahren zum Beispiel bei den Satelliten TerraSAR-X, TanDEM-X und PAZ. Dort stehen drei verschiedene Abtastraten zu Verfügung:
- 110 MHz für 100 MHz Signalbandreite,
- 165 MHz für 150 MHz Signalbandbreite und
- 330 MHz für 300 MHz Signalbandbreite.

Davor geschaltete analoge Anti-Aliasing Filter sorgen für die spektrale Beschränkung des Empfängerrauschens.

Ein anderes, seit langem genutztes Datenreduktionsverfahren ist De-Ramping, das einer Transformation in der Zeit-Frequenz-Ebene entspricht, die es erlaubt, das "gewünschte" Signal durch Tiefpassfilterung zu extrahieren. Leider eignet sich De-Ramping nur für sehr spezielle Fälle, wie Fig. 3 anschaulich zeigt. Die weiße Fläche kennzeichnet in den Frequenz-Zeit-Diagrammen bzw. Spektrogrammen die Nutzdaten eines SAR-Echos in der Frequenz-Zeit Domäne, das graue Rechteck kennzeichnet die aufzuzeichnenden Daten. Ist das Verhältnis von Chirp-Puls-Länge zu Swath-Breite des SARs groß (Diagramm links oben), dann kann durch De-Ramping die Datenmenge deutlich reduziert werden (Diagramm links unten). Bei einem breiten Swath (rechts) erhält man keinen Nutzen.

Beide **oben beschriebenen** Verfahren nutzen die Charakteristik des Empfangssignals nur in beschränktem Umfang. Für ein Instrument mit vielen, sehr unterschiedlichen SAR-Moden ist ein deutlich flexibleres Verfahren zur Datenreduktion gefragt.

M. Sack et al.: "Application of efficient linear FM matched filtering algorithms to synthetic aperture radar processing" beschreibt die Anwendbarkeit von zwei lineare Frequenmodulations - Optimalfilter - Algorithmen zur Verarbeitung von SAR Radar Daten.

S. Albrecht et al.: "Application of momentary Fourier transformt o SAR processing" beschreibt den Anwendungsfall, dass ein Fenster einen Abtastwert entlang dem Signal zwischen aufeinanderfolgenden Transformationen bewegt wird.

Josef Mittermayer: "Simulation eines Spotlight-Bildes aus Stripmap-Rohdaten" beschreibt Frequenz-Skalierungs-Verfahren zur effizienten und genauen Verarbeitung von Spotlight-SAR-Daten ohne Interpolation.

Eine der vorliegenden Erfindung zugrunde liegende Aufgabe besteht nun darin, eine verbesserte Reduktion von Daten eines Radars wie einem SAR zu ermöglichen.

Diese Aufgabe wird durch die Gegenstände mit den Merkmalen der unabhängigen Ansprüche gelöst. Weitere Ausgestaltungen der Erfindung sind Gegenstand der abhängigen Ansprüche.

Ein der vorliegenden Erfindung zugrunde liegender Gedanke besteht darin, für ein empfangenes Radar-Echosignal eines ausgesendeten Radar- Signals, das ein Chirp-ähnliches Sendesignal ist, ein zeitliches Empfangsfenster abhängig von einem vom Radar zu erfassenden Bereich, insbesondere abhängig von einem Swath eines SAR, festzulegen, das empfangene Radar-Echosignal in spektrale Subbänder aufzuteilen, und für jedes spektrale Subband ein Subbandfenster zu bestimmen, das innerhalb des vorher festgelegten zeitlichen Empfangsfensters liegt. Dadurch ist der gesamte interessierende Informationsgehalt des empfangenen Radar-Echosignals in den Subbandfenstern enthalten. Die Subbandfenster werden innerhalb des zeitlichen Empfangsfensters abhängig von der Empfangszeit des Radar-Echosignals aktiviert. Die Abtastrate zum Abtasten des empfangenen Radar-Echosignals wird dann abhängig von der Anzahl der zum jeweiligen Abtastzeitpunkt aktiven Subbandfenster eingestellt. Mit anderen Worten wird also durch die oben beschriebene erfindungsgemäße Vorgehensweise eine variable Abtastrate implementiert, wodurch die Daten des Radars reduziert werden können. Hierin wird unter einem Chirp-ähnlichen Sendesignal ein Sendesignal verstanden, das einen oder mehrere Frequenzbereiche abdeckt, d.h. eine zeitabhängige Sende-Frequenz aufweist. Typische Beispiele hierfür sind lineare und nichtlineare, insbesondere exponentielle Chirps bzw. ChirpSignale. Ganz generell sind jedoch für die Zwecke der vorliegenden Erfindung Sendesignale geeignet, deren Spektrogramm einen deterministischen Verlauf über einen oder mehrere Frequenzbereiche aufweist. Beispielsweise wäre für die Erfindung auch ein Signal geeignet, dessen Spektrogramm nicht einen linien-, sondern einen wolkenförmigen Verlauf besitzt. Wesentlich ist hierbei
nur, dass sich das Kurzzeit-Spektrum des Sendesignals im Verlauf des Sendepulses deterministisch verschiebt, so dass es möglich ist, die Subbandfenster entsprechend dem empfangenen und vom Chirp-ähnlichen Sendesignal ausgehenden Empfangssignal so geeignet festzulegen, dass möglichst der gesamte interessierende Informationsgehalt des empfangenen Radar-Echosignals in den Subbandfenstern enthalten ist, und dabei zumindest ein Teil der Subbandfenster kürzer ist als das gesamte Radar-Echosignal.

Eine Ausführungsform der Erfindung betrifft nun Verfahren zur Reduktion von Empfangsdaten eines Radars mit den folgenden Schritten: Empfangen eines Radar-Echosignals ausgehend von einem Chirp-ähnlichen Sendesignal, Festlegen eines zeitlichen Empfangsfensters des Radar-Echosignals abhängig von einem vom Radar zu erfassenden Bereich, Aufteilen des empfangenen Radar-Echosignals in mehrere spektrale Subbänder, Bestimmen von Subbandfenstern für jedes spektrale Subband, Aktivieren der Subbandfenster innerhalb des zeitlichen Empfangsfensters des Radar-Echosignals abhängig von der Empfangszeit des Radar-Echosignals, und Abtasten des Radar-Echosignals mit einer variablen Abtastrate, die abhängig von der Anzahl der zum jeweiligen Abtastzeitpunkt aktiven Subbandfenster eingestellt wird.

Insbesondere sind Ein- und Ausschaltzeitpunkte zum Aktivieren der jeweiligen Subbandfenster derart gewählt, dass jedes Subbandfenster einen zeitlichen Empfangsbereich des Radar-Echosignals abdeckt, in dem das Radar-Echosignal im jeweiligen Subbandfenster Informationen zu dem vom Radar zu erfassenden Bereich enthält.

Die spektralen Subbänder können derart gewählt sein, dass sie etwa gleich große Spektralbereiche aufweisen.

Weiterhin kann eine Grundabtastrate *Fₛ*/*M* abhängig vom Spektrum des Radar-Echosignals und der Anzahl M der spektralen Subbänder festgelegt und die Abtastrate abhängig von der Grundabtastrate eingestellt werden.

Das Aufteilen des empfangenen Radar-Echosignals in mehrere spektrale Subbänder kann derart erfolgen, dass jedes spektrale Subband an zumindest ein benachbartes spektrales Subband unmittelbar angrenzt.

Als reduzierte Empfangsdaten werden insbesondere die Abtastwerte des Radar-Echosignals zusammen mit den Ein- und Ausschaltzeitpunkten zum Aktivieren der Subbandfenster ausgegeben.

Die reduzierten Empfangsdaten können durch eine Block-Adaptive Quantisierung weiter reduziert werden.

Eine weitere Ausführungsform der Erfindung betrifft ein Verfahren zum Verarbeiten von Empfangsdaten eines Radars, die mit einem Verfahren nach der Erfindung und wie hierin beschrieben reduziert sind, bei dem das durch die Empfangsdaten repräsentierte Signal mit einer Filterbank, die konfiguriert ist, das Signal in die spektralen Subbänder aufzuteilen und die Abtastrate entsprechend der Anzahl der spektralen Subbänder zu reduzieren, digital gefiltert wird.

Als Filterbank wird insbesondere eine modifizierte DFT-Filterbank eingesetzt.

Eine weitere Ausführungsform der Erfindung betrifft ein Computerprogramm mit Programmcode zur Durchführung aller Verfahrensschritte nach der Erfindung und wie hierin beschrieben, wenn das Computerprogramm in einem Computer ausgeführt wird.

Ferner betrifft eine Ausführungsform der Erfindung einen Datenträger, auf dem der von einem Computer ausführbare Programmcode des Computerprogramms nach der Erfindung und wie vorstehend beschrieben gespeichert ist.

Eine weitere Ausführungsform der Erfindung betrifft eine Vorrichtung zur Reduktion von Empfangsdaten eines Radars mit einem Empfänger für ein Radar-Echosignal ausgehend von einem Chirp-ähnlichen Sendesignal, wobei der Empfänger derart konfiguriert ist, dass ein zeitliches Empfangsfenster des Radar-Echosignals abhängig von einem vom Radar zu erfassenden Bereich festgelegt ist, und Datenreduktionsmitteln zum Aufteilen des empfangenen Radar-Echosignals in mehrere spektrale Subbänder, Bestimmen von Subbandfenstern für jedes spektrale Subband, Aktivieren der Subbandfenster innerhalb des zeitlichen Empfangsfensters des Radar-Echosignals abhängig von der Empfangszeit des Radar-Echosignals, und Abtasten des Radar-Echosignals mit einer variablen Abtastrate, die abhängig von der Anzahl der zum jeweiligen Abtastzeitpunkt aktiven Subbandfenster eingestellt wird.

Die Datenreduktionsmittel können insbesondere konfiguriert sein, ein Verfahren nach der Erfindung und wie hierin beschrieben auszuführen.

Eine weitere Ausführungsform der Erfindung betrifft eine Vorrichtung zum Verarbeiten von Empfangsdaten eines Radars, die mit einer Vorrichtung zur Reduktion von Empfangsdaten eines Radars nach der Erfindung und wie hierin beschrieben reduziert worden sind, mit einer Filterbank zum digitalen Filtern des durch die Empfangsdaten repräsentierten Signals, wobei die Filterbank konfiguriert ist, das Signal in die spektralen Subbänder aufzuteilen und die Abtastrate entsprechend der Anzahl der spektralen Subbänder zu reduzieren.

Insbesondere ist die Filterbank eine modifizierte DFT-Filterbank ist.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in
Fig.1 die Geometrie einer von einem fliegenden SAR-System erzeugten SAR-Bildaufnahme;
Fig. 2 ein Frequenz-Zeit-Diagramm bzw. Spektrogramm mit der Zuordnung von Targets zum Radar-Empfangssignal eines SAR-Systems;
Fig. 3 Spektrogramme der Nutzdaten eines von einem SAR-System empfangenen Radarechos vor und nach De-Ramping;
Fig. 4 Spektrogramme der Nutzdaten eines von einem SAR-System empfangenen Radarechos vor und nach einer Reduktion der Datenmenge durch Filtern, das gemäß der vorliegenden Erfindung durch eine Anpassung der Abtastrate an die instantane Bandbreite des Radarechos erfolgt;
Fig. 5 ein Flussdiagramm eines Ausführungsbeispiels eines Verfahrens zur Reduktion von Empfangsdaten eines SAR-Systems gemäß der Erfindung;
Fig. 6 ein Spektrogramm eines Radarechos bzw. Radar-Empfangssignals, wobei eine Aufteilung des Empfangssignals in spektrale Subbänder und eine zeitliche Fensterung der Subbänder gemäß der vorliegenden Erfindung erfolgt;
Fig. 7 Aliasing einer MDFT Filterbank, die gemäß der vorliegenden Erfindung zum Verarbeiten eines gemäß der vorliegenden Erfindung Daten-reduzierten Radar-Empfangssignals eingesetzt wird;
Fig. 8 Spektrogramme eines Radarpulses mit Original-SAR-Daten ohne und mit einer Datenreduktion gemäß der vorliegenden Erfindung; und
Fig. 9 ein Blockschaltbild eines SAR-Systems, das ein Ausführungsbeispiel einer Vorrichtung zur Reduktion von Empfangsdaten eines Radars gemäß der Erfindung umfasst.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

Das im Nachfolgenden beschriebene Verfahren beschränkt sich nicht auf die Erfassung von Punktzielen, diese werden hierin nur aufgeführt um die Signalcharakteristik zu illustrieren. In der nachfolgenden Beschreibung bezeichnen die Begriffe Radarsignal, (Radar-)Echo(signal), (Radar-)Empfangssignal, Target-Echo, empfangenes Signal ein empfangenes Radar-Signal.

Durch die erfindungsgemäße Anpassung der Abtastrate eines empfangenen Radar-Echosignals an die instantane Bandbreite des Radarechos kann die anfallende Datenmenge des empfangenen Radarsignals optimiert werden. Die aufgezeichnete Datenmenge (graues Rechteck, links in Fig. 4) soll möglichst auf die Nutzdaten (weiße Fläche, links in Fig. 4) beschränkt werden. Insbesondere durch Herausfiltern der hellgrauen Bereiche lässt sich die anfallende Datenmenge erheblich reduzieren, so wie es in Fig. 4 rechts gezeigt ist.

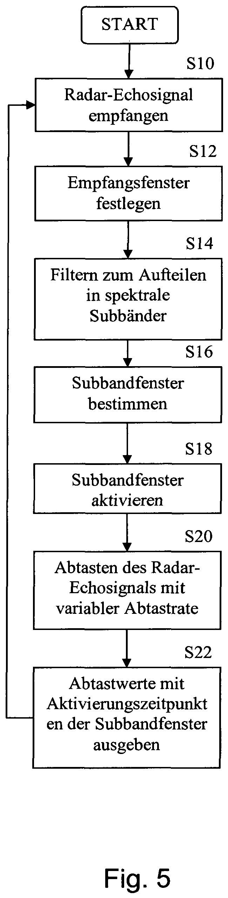

Ein Verfahren zur Reduktion von Empfangsdaten eines SAR-Systems gemäß der Erfindung wird nun anhand des in Fig. 5 gezeigten Flussdiagramms erläutert, das die einzelnen Verfahrensschritte zeigt. Dieses Verfahren kann beispielsweise in Form eines Algorithmus in einem Computerprogramm implementiert werden, das von einem Prozessor eines Computers ausgeführt wird, der beispielsweise an Bord eines SAR-Satelliten zur Vorverarbeitung und insbesondere Datenreduktion vorgesehen sein kann. Das Verfahren kann auch durch eine Vorrichtung implementiert sein, die einen Empfänger für Radar-Echosignale und Datenreduktionsmittel aufweist, welche die nachfolgend beschriebenen Verfahrensschritte implementieren. Teile des Empfängers und die Datenreduktionsmittel können hierbei zumindest teilweise in Software implementiert sein, die von einem Prozessor ausgeführt wird. Es können aber auch anwendungsspezifische Bauelemente zum Implementieren zumindest einiger Funktionen eingesetzt werden.

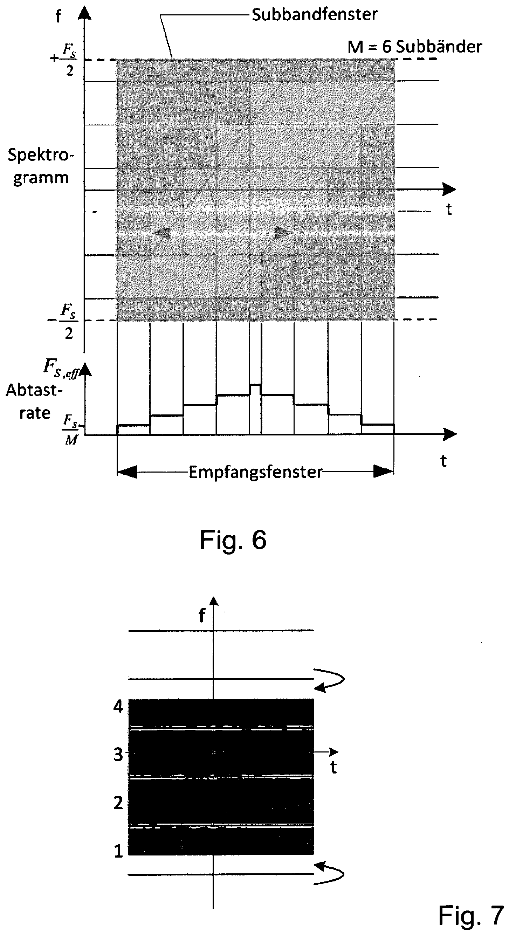

Durch die Reduktion der Daten mit dem erfindungsgemäßen Verfahren kann die Bandbreite zwischen dem SAR-Satelliten und einem SAR-Prozessor, also einer Vorrichtung zur Verarbeitung der SAR-Daten zur Erzeugung von Bildern effizient genutzt werden. In der nachfolgenden Beschreibung des Verfahrens wird außerdem auf das in Fig. 6 gezeigte Spektrogramm eines Radarechos Bezug genommen.

Zunächst wird in Schritt S10 ein Radar-Echosignal empfangen, siehe auch Fig. 1, Bezugszeichen 22 und 24. Das empfangene Radar-Echosignal ist ein Signal mit einer Frequenzbandbreite, die der Bandbreite des ausgesendeten Radarsignals entspricht, das ein Chirp-ähnliches Sendesignal, insbesondere ein Chirpsignal ist. Ein Beispiel eines typischen Spektrogramms eines solchen Radar-Echosignals ist im obigen Diagramm der Fig. 6 gezeigt. Das durch das Diagramm dargestellte Spektrogramm zeigt das Empfangssignal in der Zeit-Frequenz-Ebene.

Da, wie eingangs anhand von der in Fig. 1 gezeigten Situation erläutert ist, nur ein bestimmter Bereich vom Radar erfasst werden soll, wird im Schritt S12 ein zeitliches Empfangsfenster des Radar-Echosignals abhängig von dem vom Radar zu erfassenden Bereich festgelegt, der vom Echo des nächstgelegenen und des entferntesten Targets innerhalb des zu erfassenden Bereich bestimmt wird, siehe auch Fig. 2.

Im Schritt S14 wird das empfangene Signal bzw. Radarecho in spektrale Subbänder aufgeteilt, insbesondere durch einen entsprechenden Filter. Die Aufteilung kann so erfolgen, dass die spektralen Subbänder etwa gleich große Spektralbereiche aufweisen, d.h. Bereich mit einer etwa gleich großen Frequenzbreite. Außerdem kann die Aufteilung so erfolgen, dass jedes spektrale Subband an zumindest ein spektrales Subband unmittelbar angrenzt, wobei Angrenzen auch ein teilweises Überlappen benachbarter Subbänder oder eine kleine Frequenzlücke zwischen benachbarten Subbändern umfasst. Durch eine derartige Aufteilung kann das Frequenzspektrum des Radar-Echosignals nahtlos in Subbänder aufgeteilt werden. Es sind auch andere Aufteilungen denkbar, beispielsweise mit bestimmten Abständen zwischen benachbarten Subbändern, wodurch die Steilheit von Filtern geringer ausfallen kann. Die Aufteilung des Spektrums des Radar-Echosignals muss auch nicht zusammenhängend sein, sondern kann sich durch mehrere Komponenten zusammensetzen. In Fig. 6 erfolgt die Aufteilung des Frequenzspektrums *Fₛ* des Radar-Echosignals in M=6 Subbänder. Das erfindungsgemäße Verfahren ist prinzipiell auch dafür geeignet, mit Signalen umzugehen, die spektrale Lücken aufweisen. Insbesondere, wenn diese mit den Subbandgrenzen zusammenfallen, dann müssen die Subbänder auch nicht unmittelbar aneinander angrenzen, sondern es können zwischen den einzelnen Subbändern Lücken entsprechend den spektralen Lücken des Signals bestehen. Wichtig für die spätere Rekonstruktion des empfangenen Signals ist hierbei, dass die Subbänder das Spektrum des Eingangssignals bzw. empfangenen Signals abdecken.

Innerhalb des Empfangsfensters werden im Schritt S16 Subbandfenster so bestimmt, dass der gesamte Informationsgehalt des Radarechos in den entsprechenden Subbändern in den jeweiligen Subbandfenstern enthalten ist. Wie in Fig. 6 gezeigt ist, sind die einzelnen Subbandfenster der jeweiligen Subbänder untereinander zeitlich verschoben. Die Abschnitte der Subbandsignale außerhalb der Subbandfenster (im Fig. 6 dunkel schattiert) können verworfen werden.

Die Subbandfenster werden im Schritt S18 innerhalb des Empfangsfensters abhängig von der Empfangszeit des Radar-Echosignals aktiviert. In Fig. 6 ist gezeigt, dass die 6 Subbandfenster zu unterschiedlichen Zeitpunkten aktiviert und wieder deaktiviert werden. Die Aktivierungszeitpunkte jedes Subbandfensters hängen hierbei von dem vom Radar zu erfassenden Bereich und den Empfangszeitpunkten der aus diesem Bereich reflektierten Echos im jeweiligen Subband ab. Die Einschaltzeitpunkte jedes Subbandfensters sind in Fig. 6 ausgehend von der Startzeit T0 des Empfangsfensters jeweils um ein Mehrfaches einer gleichen Zeitspanne dT zeitlich verschoben (von unten, nur die fünf Subbandfenster zur Erfassung des gesamten Informationsgehalts des Radar-Echos werden aufgezählt):
erstes Subbandfensters Einschaltzeitpunkt t=T0 + 0*dT
zweites Subbandfensters Einschaltzeitpunkt t= T0 + 1*dT
drittes Subbandfensters Einschaltzeitpunkt t= T0 + 2*dT
viertes Subbandfensters Einschaltzeitpunkt t= T0 + 3*dT
fünftes Subbandfensters Einschaltzeitpunkt t= T0 + 4*dT

Die Ausschaltzeitpunkte jedes Subbandfensters sind in Fig. 6 ausgehend von der Startzeit T0 des Empfangsfensters und einer Zeitspanne dTw für einen Abschnittswechsel jeweils um ein Mehrfaches einer gleichen Zeitspanne dT zeitlich verschoben (von unten, nur die fünf Subbandfenster zur Erfassung des gesamten Informationsgehalts des Radar-Echos werden aufgezählt):
erstes Subbandfensters Ausschaltzeitpunkt t=T0+4*dT+dTw+0*dT
zweites Subbandfensters Ausschaltzeitpunkt t= T0+4*dT+dTw+1*dT
drittes Subbandfensters Ausschaltzeitpunkt t= T0+4*dT+dTw+2*dT
viertes Subbandfensters Ausschaltzeitpunkt t= T0+4*dT+dTw+3*dT
fünftes Subbandfensters Ausschaltzeitpunkt t= T0+4*dT+dTw+4*dT

Die in Fig. 6 gezeigte zeitliche Fensterung des Subbänder ist nur ein Beispiel und die gleiche Zeitspanne dT kann auch variabel sein.

In Schritt S20 wird das Radar-Echosignal abgetastet. Die Abtastrate folgt hierbei näherungsweise der instantanen Signalbandbreite, indem sie abhängig von der Anzahl der zum jeweiligen Abtastzeitpunkt aktiven Subbandfenster eingestellt wird. Die Abtastrate kann abhängig von einer Grundabtastrate eingestellt werden, die wiederum abhängig vom Spektrum des Radar-Echosignals und der Anzahl der spektralen Subbänder festgelegt sein kann. In Fig. 6 ist beispielsweise eine Grundabtastrate *F_{S}*/*M* für M=6 spektrale Subbänder und eine Bandbreite *F_{S}* des Radar-Echosignals festgelegt und die Abtastrate wird abhängig von den aktiven Subbandfenstern auf einen Wert *F_{S}*/*6, 2** *F_{S}*/*6, 3** *F_{S}*/*6, 4** *F_{S}*/*6 oder 5** *F_{S}*/*6* eingestellt. Die Abtastrate ändert sich also treppenförmig über die Zeit. Insbesondere ist es so, dass sich die Abtastrate "implizit" durch die Auswahl der Subbänder ergibt und die Abtastrate die Summe der Subband-Abtastraten der aktiven Subbänder ist.

Als reduzierte Empfangsdaten des Radar-Echosignals werden die Abtastwerte zusammen mit den Ein- und Ausschaltzeitpunkten zum Aktivieren der Subbandfenster in Schritt S22 ausgegeben. Die derart reduzierten Daten können nun weiter transportiert oder gespeichert werden.

Durch geeignete Bestimmung der Ein- und Ausschaltzeitpunkte der Subbandsignale bzw. Subbandfenster lassen sich ebenso nichtlinearfrequenzmodulierte Chirpsignale verwenden. Ebenso muss das Signalspektrum auch nicht zusammenhängend sein sondern könnte sich auch aus mehrere Komponenten zusammensetzen.

Eine zusätzliche Reduktion der Datenmenge ist möglich durch Block-Adaptive Quantisierung (BAQ) der Subbandsignale, wie es in dem Fachbuch "Synthetic Aperture Radar Systems and Signal Processing", Curlander John C. und McDonough Robert N., New York, John Wiley & Sons, Inc., 1991, beschrieben ist.

Zur Weiterverarbeitung des Radarsignals müssen die Subbandsignale wieder geeignet zu einem einzelnen Signal rekonstruiert werden. Die Zerlegung des Empfangssignals in Subbänder und die Rekonstruktion zu einem Ausgangssignal erfolgt mittels einer Filterbank. Hierbei wird das Signal in zum Beispiel M = 16 Subbänder gleicher Breite aufgeteilt und die Abtastrate der Subbänder um M reduziert (kritische Dezimierung).

Grundsätzlich entstehen bei der Dezimierung Aliassignale, die zu nicht vertretbaren Störungen des Nutzsignals führen. Es kann daher eine sogenannte "Modifizierte DFT (Discrete Fourier Transformation) Filterbank" (siehe den Fachaufsatz "Modified DFT filter banks with perfect reconstruction", Karp T. und Fliege N.J., IEEE Transactions on Circuits and Systems II: Analog and Digital Signal Processing. - 1999. - Bd. 46. - S. 1404-1414.) verwendet werden, die strukturbedingt einen Teil der Aliassignale auslöscht. Verbleibende Aliassignale werden entweder durch die Filterdämpfung ausreichend unterdrückt oder es handelt sich um Spiegelsignale, was zwei Effekte zur Folge hat:
1. Diese Signale treten nur am äußeren Rand des Spektrums der äußeren Subbänder auf.
2. Das Vorzeichen der Frequenzmodulation dieser Signale ist umgekehrt im Vergleich zu den nominellen Radar Signalen.

Der erste Punkt wird im Folgenden kurz unter Bezug auf Fig. 7, die ein Aliasing einer MDFT-Filterbank zeigt, skizziert: das Spektrum des Radar Signals ist dunkelgrau gezeichnet. Hierzu werden die Subbänder 1..4 (beliebige Nummerierung) verwendet. Aus dem Spektralbereich oberhalb von Subband 4 und unterhalb von Subband 1 wird nun Energie in die Subbänder 4 bzw. 1 übertragen. Dabei kann es sich um Empfängerrauschen oder sonstige unerwünschte Signale handeln. Aufgrund der Filtercharakteristik und der speziellen Struktur dieser Filterbank tritt diese Signalübertragung nur an den Rändern dieser Subbänder auf. Ist die Bandbreite des Nutzsignals so wie in Fig. 7 gezeigt, dann gibt es keine spektrale Überlappung. Ist die Bandbreite des Nutzsignals größer, dann müssen die nächsten sich anschließenden Subbänder mit übertragen werden. Der exakte Punkt ist neben den Leistungsdichten von Signal und Rauschen ebenfalls abhängig von der Steilheit der Filterflanke, der Sperrdämpfung sowie dem gewünschten Signal zu Rausch Verhältnis.

Der zweite Punkt erhält im Bereich der Treppenstufen in Fig. 6 Bedeutung. Hier findet sich nämlich in den Spektralbereichen der nicht übertragenen Subbänder Signalenergie, die von Target-Echos außerhalb des gewünschten Areals (vergl. Fig. 1) herrührt. Da es sich aber nun um Spiegelsignale handelt, ist das Vorzeichen der Frequenzmodulation umgekehrt wie in dem nominellen Radarsignal. In der nachfolgenden Verarbeitung des Radarsignals erfährt dieses Spiegelsignal keinen Korrelationsgewinn und äußert sich in dem endgültigen Radar-Produkt lediglich so wie Rauschen. Unter Berücksichtigung der Filtersteilheit und - Sperrdämpfung, lassen sich geeignete Schaltzeitpunkte für die Subbandsignale finden, sodass das gewünschte Signal zu Rausch Verhältnis nicht unterschritten wird.

Ein Verfahren zum Verarbeiten der mit einem erfindungsgemäßen Verfahren reduzierten Empfangsdaten und wie vorstehend erläutert kann in Form eines Algorithmus in einem Computerprogramm implementiert werden, das von einem Prozessor eines Computers ausgeführt wird, der beispielsweise als SAR-Prozessor zur Bildprozessierung eingesetzt wird. Das Verfahren kann auch durch eine Vorrichtung implementiert sein, die eine Filterbank zum digitalen Filtern des durch die Empfangsdaten repräsentierten Signals aufweist, insbesondere eine modifizierte DFT-Filterbank, die konfiguriert ist, das Signal in die spektralen Subbänder aufzuteilen und die Abtastrate entsprechend der Anzahl der spektralen Subbänder zu reduzieren, wie vorstehend beschrieben. Teile der Filterbank können hierbei zumindest teilweise in Software implementiert sein, die von einem Prozessor ausgeführt wird. Es können aber auch anwendungsspezifische Bauelemente zum Implementieren zumindest einiger Funktionen eingesetzt werden, beispielsweise FPGAs (Field Programable Gate Arrays).

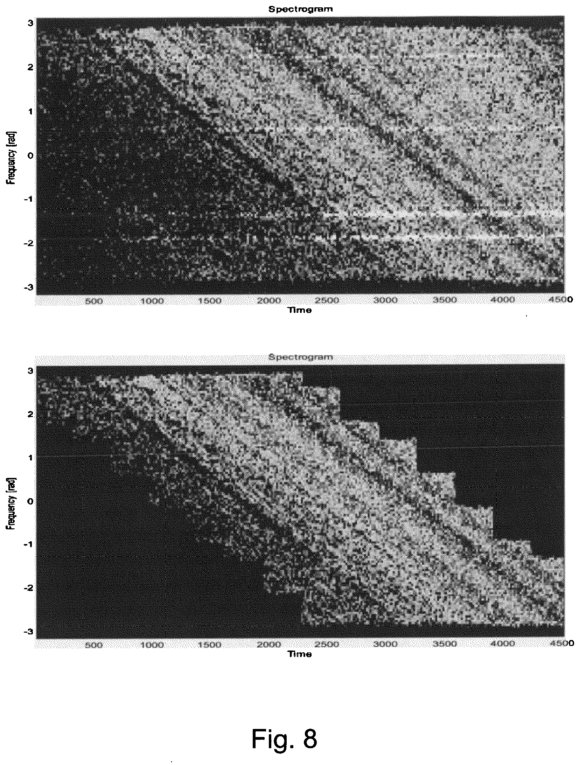

Als Beispiel sind in Fig. 8 die Spektrogramme eines empfangenen Radar-Echosignals ohne und mit Datenreduktion gezeigt, nämlich das Spektrogramm eines Radar-Echosignals (-Pulses) mit Original-SAR-Daten aus einer TerraSAR Aufnahme ohne Datenreduktion (oben), und mit Datenreduktion (unten). Die Frequenz ist hier auf ±π und die Zeit beliebig skaliert. In dem gewählten Beispiel beträgt der Umfang der Datenreduktion 43%.

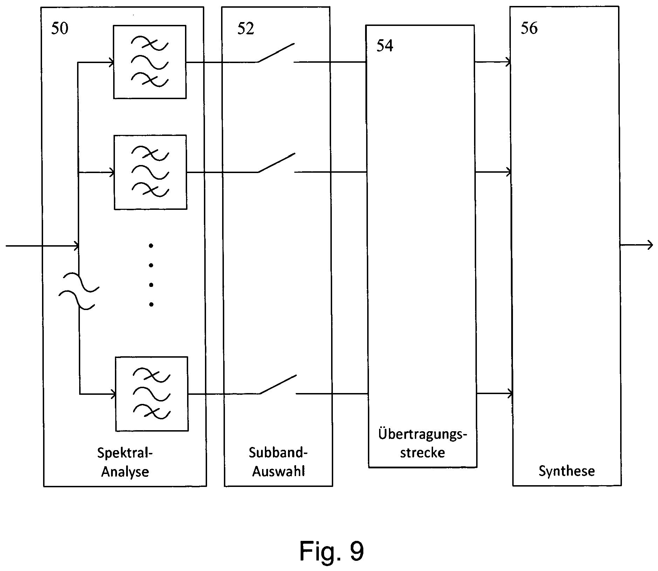

In Fig. 9 ist ein SAR-System gezeigt, in dem eine Datenreduktionsvorrichtung gemäß der Erfindung eingesetzt wird. Die Datenreduktionsvorrichtung weist eine Spektral-Analyseeinrichtung 50, welche ein empfangenes Radar-Echosignal in mehrere spektrale Subbänder aufteilt, und eine Subband-Auswahleinrichtung 52 auf, welche für jedes spektrale Subband Subbandfenster bestimmt, die Subbandfenster innerhalb des zeitlichen Empfangsfensters des Radar-Echosignals abhängig von der Empfangszeit des Radar-Echosignals aktiviert, und das Radar-Echosignal mit einer Abtastrate abtastet, die abhängig von der Anzahl der zum jeweiligen Abtastzeitpunkt aktiven Subbandfenster eingestellt wird. Die so erzeugten reduzierten Empfangsdaten des Radar-Echosignals werden über eine Übertragungsstrecke 54, insbesondere eine Funkübertragungsstrecke, an eine SAR-Syntheseeinrichtung 56 übertragen, die durch einen SAR-Prozessor implementiert ist und aus den reduzierten Empfangsdaten des Radar-Echosignals das ursprüngliche Radar-Echosignal wie oben beschrieben rekonstruiert.

### BEZUGSZEICHEN UND AKRONYME

- 10: Chirpsignal
- 12: SAR-System
- 14: durch das SAR-System 12 beleuchtetes Areal
- 16: für die Bilderstellung durch das SAR-System 12 gewünschtes Areal
- 18: im Areal 16 zum SAR-System 12 nächstgelegenes Target
- 20: im Areal 16 vom SAR-System 12 entferntestes Target
- 22: Radar-Echosignal des Targets 18
- 24: Radar-Echosignal des Targets 20
- 50: Spektral-Analyseeinrichtung
- 52: Subband-Auswahleinrichtung
- 54: Übertragungsstrecke für reduzierte SAR-Daten
- 56: SAR-Syntheseeinrichtung

## Patentansprüche

1. Verfahren zur Reduktion von Empfangsdaten eines Radars mit den folgenden Schritten:
- Empfangen eines Radar-Echosignals (S10) ausgehend von einem Chirp-ähnlichen Sendesignal,
- Festlegen eines zeitlichen Empfangsfensters des Radar-Echosignals abhängig von einem vom Radar zu erfassenden Bereich (S12),
- Aufteilen des empfangenen Radar-Echosignals in mehrere spektrale Subbänder (S14),
- Bestimmen von Subbandfenstern für jedes spektrale Subband (S16),
- Aktivieren der Subbandfenster innerhalb des zeitlichen Empfangsfensters des Radar-Echosignals abhängig von der Empfangszeit des Radar-Echosignals (S18), und
- Abtasten des Radar-Echosignals mit einer variablen Abtastrate, die abhängig von der Anzahl der zum jeweiligen Abtastzeitpunkt aktiven Subbandfenster eingestellt wird (S20).

2. Verfahren nach Anspruch 1,
**dadurch gekennzeichnet, dass**
Ein- und Ausschaltzeitpunkte zum Aktivieren der jeweiligen Subbandfenster derart gewählt sind, dass jedes Subbandfenster einen zeitlichen Empfangsbereich des Radar-Echosignals abdeckt, in dem das Radar-Echosignal im jeweiligen Subbandfenster Informationen zu dem vom Radar zu erfassenden Bereich enthält.

3. Verfahren nach Anspruch 1 oder 2,
**dadurch gekennzeichnet, dass**
die spektralen Subbänder derart gewählt sind, dass sie etwa gleich große Spektralbereiche aufweisen.

4. Verfahren nach Anspruch 1, 2 oder 3,
**dadurch gekennzeichnet, dass**
eine GrundabtastrateFS/Mabhängig vom Spektrum des Radar-Echosignals und der AnzahlMder spektralen Subbänder festgelegt wird und die Abtastrate abhängig von der Grundabtastrate eingestellt wird.

5. Verfahren nach einem der vorhergehenden Ansprüche,
**dadurch gekennzeichnet, dass**
das Aufteilen des empfangenen Radar-Echosignals in mehrere spektrale Subbänder derart erfolgt, dass jedes spektrale Subband an zumindest ein benachbartes spektrales Subband unmittelbar angrenzt.

6. Verfahren nach einem der vorhergehenden Ansprüche,
**dadurch gekennzeichnet, dass**
als reduzierte Empfangsdaten die Abtastwerte des Radar-Echosignals zusammen mit den Ein- und Ausschaltzeitpunkten zum Aktivieren der Subbandfenster ausgegeben werden (S22).

7. Verfahren nach Anspruch 6,
**dadurch gekennzeichnet, dass**
die reduzierten Empfangsdaten durch eine Block-Adaptive Quantisierung weiter reduziert werden.

8. Verfahren zum Verarbeiten von Empfangsdaten eines Radars, die mit einem Verfahren nach einem der vorhergehenden Ansprüche reduziert sind, bei dem das durch die Empfangsdaten repräsentierte Signal mit einer Filterbank, die konfiguriert ist, das Signal in die spektralen Subbänder aufzuteilen und die Abtastrate entsprechend der Anzahl der spektralen Subbänder zu reduzieren, digital gefiltert wird.

9. Verfahren nach Anspruch 8,
**dadurch gekennzeichnet, dass**
als Filterbank eine modifizierte DFT-Filterbank eingesetzt wird.

10. Computerprogramm mit Programmcode zur Durchführung aller Verfahrensschritte eines Verfahrens gemäß einem der vorhergehenden Ansprüche, wenn das Computerprogramm von einem Computer ausgeführt wird.

11. Datenträger, auf dem der von einem Computer ausführbare Programmcode des Computerprogramms nach Anspruch 10 gespeichert ist.

12. Vorrichtung zur Reduktion von Empfangsdaten eines Radars mit
- einem Empfänger für ein Radar-Echosignal ausgehend von einem Chirp-ähnlichen Sendesignal ist, wobei der Empfänger derart konfiguriert ist, dass ein zeitliches Empfangsfenster des Radar-Echosignals abhängig von einem vom Radar zu erfassenden Bereich festgelegt ist, und
- Datenreduktionsmitteln (50, 52) zum Aufteilen des empfangenen Radar-Echosignals in mehrere spektrale Subbänder, Bestimmen von Subbandfenstern für jedes spektrale Subband, Aktivieren der Subbandfenster innerhalb des zeitlichen Empfangsfensters des Radar-Echosignals abhängig von der Empfangszeit des Radar-Echosignals, und Abtasten des Radar-Echosignals mit einer variablen Abtastrate, die abhängig von der Anzahl der zum jeweiligen Abtastzeitpunkt aktiven Subbandfenster eingestellt wird.

13. Vorrichtung nach Anspruch 12,
**dadurch gekennzeichnet, dass**
die Datenreduktionsmittel konfiguriert sind, ein Verfahren nach einem der Ansprüche 2 bis 7 auszuführen.

14. Vorrichtung zum Verarbeiten von Empfangsdaten eines Radars, die mit einer Vorrichtung nach Anspruch 12 oder 13 reduziert worden sind, mit einer Filterbank zum digitalen Filtern des durch die Empfangsdaten repräsentierten Signals, wobei die Filterbank konfiguriert ist, das Signal in die spektralen Subbänder aufzuteilen und die Abtastrate entsprechend der Anzahl der spektralen Subbänder zu reduzieren.

15. Vorrichtung nach Anspruch 14,
**dadurch gekennzeichnet, dass**
die Filterbank eine modifizierte DFT-Filterbank ist.

## Claims

1. A method for the reduction of reception data of a radar, comprising the following steps:
- receiving (S10) a radar echo signal emanating from a chirp-like transmission signal,
- specifying (S12) a temporal reception window of the radar echo signal as a function of an area to be detected by the radar,
- dividing (S14) the received radar echo signal into a plurality of spectral sub-bands,
- determining (S16) sub-band windows for each spectral sub-band,
- activating (S18) the sub-band windows within the temporal reception window of the radar echo signal as a function of the reception time of the radar echo signal, and
- sampling (S20) the radar echo signal with a variable sampling rate that is set as a function of the number of sub-band windows that are active at the particular sampling time.

2. The method according to Claim 1,
**characterized in that**
switch-on and switch-off times for activating the particular sub-band windows are selected in such a way that each sub-band window covers a temporal reception area of the radar echo signal in which the radar echo signal in the particular sub-band window contains information about the area to be detected by the radar.

3. The method according to Claim 1 or 2,
**characterized in that**
the spectral sub-bands are selected in such a way that they have spectral ranges approximately equal in size.

4. The method according to Claim 1, 2, or 3,
**characterized in that**
a baseline sampling rate is specified as a function of the spectrum of the radar echo signal and the number of spectral sub-bands, and the sampling rate is set as a function of the baseline sampling rate.

5. The method according to one of the preceding claims,
**characterized in that**
the division of the received radar echo signal into a plurality of spectral sub-bands takes place in such a way that each spectral sub-band directly borders at least one adjacent spectral sub-band.

6. The method according to one of the preceding claims,
**characterized in that**
the sampling values of the radar echo signal together with the switch-on and switch-off times are output (S22) as reduced reception data in order to activate the sub-band windows.

7. The method according to Claim 6,
**characterized in that**
the reduced reception data are reduced by a block adaptive quantization.

8. A method for processing reception data of a radar, which are reduced using a method according to one of the preceding claims, wherein the signal represented by the reception data is digitally filtered with a filter bank that is configured for dividing the signal into the spectral sub-bands, and reducing the sampling rate according to the number of spectral sub-bands.

9. The method according to Claim 8,
**characterized in that**
a modified DFT filter bank is used as the filter bank.

10. A computer program having program code for carrying out all method steps of a method according to one of the preceding claims, when the computer program is executed by a computer.

11. A data medium on which the program code of the computer program which is executable by a computer according to Claim 10 is stored.

12. A device for the reduction of reception data of a radar, including
- a receiver for a radar echo signal emanating from a chirp-like transmission signal, wherein the receiver is configured in such a way that a temporal reception window of the radar echo signal is set as a function of an area to be detected by the radar, and
- data reduction means (50, 52) for dividing the received radar echo signal into a plurality of spectral sub-bands, determining sub-band windows for each spectral sub-band, activating the sub-band windows within the temporal reception window of the radar echo signal as a function of the reception time of the radar echo signal, and sampling the radar echo signal with a variable sampling rate that is set as a function of the number of sub-band windows that are active at the particular sampling time.

13. The device according to Claim 12,
**characterized in that**
the data reduction means are configured for carrying out a method according to one of Claims 2 to 7.

14. A device for processing reception data of a radar that have been reduced using a device according to Claim 12 or 13, including a filter bank for digitally filtering the signal represented by the reception data, wherein the filter bank is configured for dividing the signal into the spectral sub-bands, and reducing the sampling rate according to the number of spectral sub-bands.

15. The device according to Claim 14,
**characterized in that**
the filter bank is a modified DFT filter bank.

## Revendications

1. Procédé de réduction de données de réception d'un radar, comprenant les étapes suivantes consistant à :
- recevoir un signal d'écho radar partant d'un signal d'émission de type chirp (S10),
- établir une fenêtre temporelle de réception du signal d'écho radar en fonction d'une plage à détecter par le radar (S12),
- diviser le signal d'écho radar reçu en plusieurs sous-bandes spectrales (S14),
- déterminer des fenêtres de sous-bande pour chaque sous-bande spectrale (S16),
- activer la fenêtre de sous-bande à l'intérieur de la fenêtre temporelle de réception du signal d'écho radar en fonction du temps de réception du signal d'écho radar (S18), et
- échantillonner le signal d'écho radar avec un taux d'échantillonnage variable réglé en fonction du nombre de fenêtres de sous-bande actives à l'instant d'échantillonnage respectif (S20).

2. Procédé selon la revendication 1, **caractérisé en ce que** des instants de mise en marche/arrêt pour activer les fenêtres de sous-bande respectives sont sélectionnés de telle sorte que chaque fenêtre de sous-bande couvre une plage temporelle de réception du signal d'écho radar dans laquelle le signal d'écho radar comporte dans la fenêtre de sous-bande respective des informations concernant la plage à détecter par le radar.

3. Procédé selon la revendication 1 ou 2, **caractérisé en ce que** les sous-bandes spectrales sont sélectionnées de telle sorte qu'elles présentent des zones spectrales approximativement de même dimension.

4. Procédé selon la revendication 1, 2 ou 3, **caractérisé en ce qu'**un taux d'échantillonnage de base FS/M est établi en fonction du spectre du signal d'écho radar et du nombre M des sous-bandes spectrales et que le taux d'échantillonnage est réglé en fonction du taux d'échantillonnage de base.

5. Procédé selon l'une quelconque des revendications précédentes, **caractérisé en ce que** la division du signal d'écho radar reçu en plusieurs sous-bandes spectrales est effectuée de telle sorte que chaque sous-bande spectrale est directement contiguë à au moins une sous-bande spectrale adjacente.

6. Procédé selon l'une quelconque des revendications précédentes, **caractérisé en ce que** les valeurs d'échantillonnage du signal d'écho radar sont sorties en tant que données de réception réduites avec les instants de mise en marche/arrêt pour activer les fenêtres de sous-bandes (S22).

7. Procédé selon la revendication 6, **caractérisé en ce que** les données de réception réduites sont réduites davantage par une quantification adaptative par blocs.

8. Procédé de traitement de données de réception d'un radar réduites par un procédé selon l'une quelconque des revendications précédentes, dans lequel le signal représenté par les données de réception subi un filtrage numérique par un banc de filtres configuré pour diviser le signal en sous-bandes spectrales et réduire le taux d'échantillonnage selon le nombre des sous-bandes spectrales.

9. Procédé selon la revendication 8, **caractérisé en ce qu'**un banc de filtres TFD modifié est utilisé comme banc de filtres.

10. Programme informatique avec code programme pour exécuter toutes les étapes de procédé d'un procédé selon l'une quelconque des revendications précédentes lorsque le programme informatique est exécuté par un ordinateur.

11. Support de données sur lequel est stocké le code programme exécutable par ordinateur du programme informatique selon la revendication 10.

12. Dispositif de réduction de données de réception d'un radar, avec
- un récepteur pour un signal d'écho radar en partant d'un signal d'émission de type chirp, dans lequel le récepteur est configuré de telle sorte qu'une fenêtre temporelle de réception du signal d'écho radar est établie en fonction d'une zone à détecter par le radar, et
- des moyens de réduction de données (50, 52) pour diviser le signal d'écho radar reçu en plusieurs sous-bandes spectrales, déterminer des fenêtres de sous-bande pour chaque sous-bande spectrale, activer les fenêtres de sous-bande à l'intérieur de la fenêtre temporelle de réception du signal d'écho radar en fonction du temps de réception du signal d'écho radar, et échantillonner le signal d'écho radar avec un taux d'échantillonnage variable réglé en fonction du nombre de fenêtres de sous-bande actives à l'instant d'échantillonnage respectif.

13. Dispositif selon la revendication 12, **caractérisé en ce que** les moyens de réduction de données sont configurés pour exécuter un procédé selon l'une quelconque des revendications 2 à 7.

14. Dispositif de traitement de données de réception d'un radar réduites par un dispositif selon la revendication 12 ou 13, avec un banc de filtres pour un filtrage numérique du signal représenté par les données de réception, dans lequel le banc de filtres est configuré pour diviser le signal en sous-bandes spectrales et réduire le taux d'échantillonnage selon le nombre des sous-bandes spectrales.

15. Dispositif selon la revendication 14, **caractérisé en ce que** le banc de filtres est un banc de filtres TFD modifié.
